# EUROPÄISCHE PATENTSCHRIFT

(11) **EP 2 225 811 B1**
(45) Veröffentlichungstag und Bekanntmachung des Hinweises auf die Patenterteilung: **18.05.2011**
(21) Anmeldenummer: 08785342.0
(22) Anmeldetag: 05.08.2008
(51) Int. Cl.: H02G 15/04, H02G 3/06

(54) **ANSCHLUSSARMATUR**
CONNECTION FITTING
RACCORD

(30) Priorität: 20.12.2007 DE 202007017765 U
(43) Veröffentlichungstag der Anmeldung: 08.09.2010
(73) Patentinhaber: HUMMEL AG, 79211 Denzlingen (DE)
(72) Erfinder: BARTHOLOMÄ, Mario, 79297 Winden (DE); ZÜGEL, Fritz, 79183 Waldkirch (DE); GÖTZ, Volker, 79341 Kenzingen (DE); GERBER, Philipp, 79261 Gutach (DE)
(74) Vertreter: Maucher, Wolfgang
(86) Internationale Anmeldenummer: PCT/EP2008/006414
(87) Internationale Veröffentlichungsnummer: WO 2009/080134

(56) Entgegenhaltungen:
- EP-A- 1 710 886
- EP-B- 1 065 426
- DE-A1- 10 357 646
- DE-C1- 19 812 079
- DE-C2- 4 325 420
- DE-U1-202007 003 957

## Beschreibung

Die Erfindung betrifft eine Anschlussarmatur zum Befestigen von länglichen Körpern, beispielsweise von Schläuchen, Wellenschläuchen, Rohren, Kabeln oder dergleichen, an einer Öffnung oder einem Durchbruch oder einer Lochung, zum Beispiel in einer Wand eines Gehäuses oder dergleichen, wobei die Anschlussarmatur wenigstens einen Befestigungsvorsprung aufweist, der durch offene Schlitze in Widerlagerzungen aufgeteilt ist, an deren freien Enden radial nach außen vorstehende Haltevorsprünge angeordnet sind, wobei diese Widerlagerzungen bei Einschieben des Befestigungsvorsprungs in die Öffnung, den Durchbruch oder dergleichen Lochung durch deren Lochungsrand radial nach innen verformbar sind und hinter dem Rand in die Halteposition gelangen, in welcher die Haltevorsprünge diesen Rand zumindest teilweise hintergreifen, und wobei mit Abstand zu den Haltevorsprüngen wenigstens ein Anschlag angeordnet ist, der in Gebrauchsstellung an dem hintergriffenen Rand der Öffnung oder dergleichen gegenüberliegenden Lochungsrand anliegt und die Anschlussarmatur in ihrem Inneren eine ihr zugehörige axial verschiebbare Sperre aufweist, die in Löseposition außerhalb des Bereiches der Widerlagerzungen oder Haltevorsprünge und in Gebrauchsstellung zwischen dieser eingreifend angeordnet ist und die Haltevorsprünge in dieser Gebrauchsstellung gegen eine radiale Verformung sperrt. Die Erfindung betrifft auch eine winkel- oder T-förmige Anschlussarmatur.

Derartige Anschlussarmaturen sind bekannt aus der EP 1 065 426 B1, bei der eine Sperre eine profilierte Innenseite aufweist, die von ihren beiden Seiten her für ein Hilfswerkzeug zugänglich ist zur Verschiebung der Sperre zwischen Löseposition und Halteposition.

Aus der DE 198 12 079 C1 ist eine Anschlussarmatur bekannt, bei der Widerlagerzungen an ihrem in Gebrauchsstellung innerhalb einer Öffnung oder dergleichen befindlichen Bereich eine geringere Außenabmessung als die Öffnung oder dergleichen haben und mittels einer in axialer Richtung zwischen sie verschiebbaren Sperre aufweitbar oder aufspreizbar sind.

Aus der DE 43 25 420 C2 ist eine Kabeldurchgangsvorrichtung bekannt, bei der eine Steckmuffe mindestens zwei federnde Rastfinger besitzt und eine innerhalb des Innenraums der Steckmuffe angeordnete Klemmhülse an einem Ende einen Klemmkäfig und am anderen Ende einen erweiterten Hals aufweist, wobei die Rastfinger durch den erweiterten Hals aufgespreizt werden.

Der Erfindung liegt die Aufgabe zugrunde, eine Anschlussarmatur der vorgenannten Art zu schaffen, die aus ihren Einzelteilen mit geringem Aufwand zusammensetzbar ist und welche die Befestigung von Kabeln, Schläuchen und dergleichen länglichen Körpern in einer Öffnung oder Lochung einer Wand mit wenigen Arbeitsschritten ermöglicht.

Die Erfindung sieht zur Lösung der Aufgabe vor, dass die Widerlagerzungen an einem Spannelement ausgebildet sind, dass das Spannelement ein Gewinde aufweist, dass eine Schraubhülse vorhanden ist, an deren einem axialen Ende Klemmlamellen oder Klemmfinger zur Halterung der Schläuche oder dergleichen ausgeformt sind, dass die Sperre mit der Schraubhülse verbunden und durch die Schraubhülse axial verschiebbar ist, dass die Schraubhülse für das axiale Verschieben der Sperre ein zu dem Gewinde des Spannelements passendes erstes Gewinde hat, dass die Schraubhülse ein Außengewinde für eine zum Betätigen der Klemmlamellen oder Klemmfinger dienende Überwurfmutter hat und dass das Außengewinde der Schraubhülse gleichsinnig zu dem ersten Gewinde des Spannelements ausgebildet ist.

Dadurch, dass die Schraubhülse einerseits Klemmlamellen oder Klemmfinger aufweist und andererseits mit der Sperre verbunden ist, kann die Schraubhülse als ein Teil zwei Funktionen ausüben, nämlich die Fixierung des Kabels, Schlauchs oder dergleichen länglichen Körpers und die Betätigung der Sperre. Somit ist die Zahl der Einzelteile, aus denen die erfindungsgemäße Anschlussarmatur zusammengesetzt ist, gegenüber bekannten Anschlussarmaturen reduziert. Durch die Ausbildung von zueinander passenden Gewinden an Spannelement und Schraubhülse ist die Betätigung der Sperre durch ein Verdrehen der Schraubhülse gegen das Spannelement vornehmbar. Durch die Ausbildung von zueinander passenden Gewinden an Schraubhülse und Überwurfmutter ist eine Fixierung des Kabels, Schlauchs oder dergleichen durch eine Betätigung der Klemmlamellen oder Klemmfinger bewirkbar, wobei diese Klemmlamellen oder Klemmfinger durch ein Verdrehen der Überwurfmutter gegen die Schraubhülse betätigt werden.

Insgesamt ist somit durch ein Verdrehen der Überwurfmutter gegen das Spannelement einerseits ein Betätigen der Klemmlamellen oder Klemmfinger und andererseits ein Betätigen der Sperre, also ein Überführen der Sperre aus der Löseposition in die Halteposition, also in den axialen Bereich der Widerlagerzungen, in einem einzigen Arbeitsgang ausführbar, indem beim Verdrehen der Überwurfmutter gegen das Spannelement die Schraubhülsen teilweise mitgenommen, also mitgedreht, wird, bis die Sperre in die Halteposition gelangt ist und dort ein Rückverschwenken der Widerlagerzungen radial nach innen verhindert. Aufwändige Führungsmittel für die Sperre, die etwa eine Verdrehsicherung bewirken, können vermieden werden.

Die durch die Schraubhülse betätigbare Sperre kann als hülsenförmiges Teil in die Schraubhülse eingesetzt oder aufgesteckt werden, wobei ein entsprechender Vorsprung an der Schraubhülse auf die Sperre zur Betätigung einwirkt. Ganz besonders günstig und von erheblicher vorteilhafter Bedeutung ist es aber, wenn die Sperre mit der Schraubhülse einstückig verbunden ist. Sperre und Schraubhülse sind somit aus einem Kunststoffspritzteil fertigbar und müssen nicht zum Gebrauch zusammengesetzt und in zusammengesetzter Position gehalten werden.

Eine Ausführungsform der Erfindung kann vorsehen, dass das Gewinde des Spannelements ein Außengewinde ist und dass das erste Gewinde der Schraubhülse ein Innengewinde ist. Somit greift das Spannelement in das Innere der Schraubhülse ein, und die in diesem axialen Eingriffsbereich radial außen liegende Seite der Schraubhülse bietet eine Angriffsfläche für ein Betätigungswerkzeug. Somit ist eine kurze Baulänge der Anschlussarmatur insgesamt erreicht.

Bei einer vorteilhaften Ausgestaltung ist das erste Gewinde der Schraubhülse in einem ersten axialen Bereich der Schraubhülse angeordnet und das Außengewinde der Schraubhülse in einem zweiten axialen Bereich der Schraubhülse angeordnet, wobei der erste axiale Bereich mit dem zweiten axialen Bereich der Schraubhülse überlappt. Der erste axiale Bereich erstreckt sich somit teilweise in den zweiten axialen Bereich. Somit ist bei einer insgesamt möglichst kurzen axialen Länge genügend Verstellweg für die Überwurfmutter und das Spannelement relativ zur Schraubhülse bereitgestellt und somit die Befestigung der Anschlussarmatur an Wänden mit unterschiedlichen Wandstärken und die Fixierung von Schläuchen und dergleichen mit unterschiedlichem Schlauchdurchmesser ermöglicht.

Der verfügbare Verstellweg der Überwurfmutter relativ zur Schraubhülse bestimmt, wie weit die Klemmlamellen oder Klemmfinger betätigt, also zusammengedrückt werden können, um ein Kabel, einen Schlauch oder dergleichen zu fixieren, während der verfügbare Verstellweg des Spannelements relativ zur Schraubhülse festlegt, für welchen Wandstärkenbereich die Anschlussarmatur ausgebildet ist. Durch die Überlappung der Bereiche, also eine teilweise in Radialrichtung verschachtelte Anordnung, wird die axiale Länge vorteilhaft weiter verkürzt.

Besonders günstig und zweckmäßig ist es, wenn die Schraubhülse die Sperre mit einem im Querschnitt ringförmigen Zwischenraum axial übergreift. In diesem Zwischenraum ist das hülsenförmige Ende des Spannelementes einführbar, und die Verbindung zwischen Sperre und Schraubhülse und/oder die Betätigung der Sperre durch die Schraubhülse muss nicht durch ein aufwändiges Durchgreifen der Sperre durch Ausnehmungen des Spannelements erfolgen. Die Einzelteile der Anschlussarmatur sind somit in einfacher Spritzgusstechnik herstellbar und mit geringem Aufwand zusammenmontierbar. Der durch das Übergreifen der Schraubhülse gebildete, im Querschnitt ringförmige Zwischenraum ist vorteilhaft zur Aufnahme des ersten Gewindes der Schraubhülse nutzbar.

Eine Ausführungsform der Erfindung kann vorsehen, dass an den von den Klemmlamellen oder Klemmfingern abgewandten axialen Ende der Schraubhülse der Anschlag ausgebildet ist. Der Anschlag bildet eine Fläche aus, die auf die Wand in der Umgebung der Öffnung oder dergleichen aufsetzbar ist. Die Schraubhülse ist über das erste Gewinde durch Drehen gegenüber dem Spannelement axial verschiebbar, wodurch der Abstand zwischen dem Anschlag, insbesondere der von dem Anschlag gebildeten Aufsetzfläche, und den Haltevorsprüngen der Widerlagerzungen axial verschiebbar. Somit sind Wände mit unterschiedlichen Wandstärken zwischen den Haltevorsprüngen und der Aufsetzfläche des Anschlags aufnehmbar, und es ist mit dem Anschlag und den Haltevorsprüngen eine Anpresskraft auf Vorder- und Rückseite der Wand in Umgebung der Öffnung oder dergleichen einbringbar, durch welche die Anschlussarmatur an der Wand befestigt und gegen Verdrehen gesichert ist.

Bei einer vorteilhaften Ausgestaltung ist das Spannelement nach Einstecken in Gebrauchsstellung kraftschlüssig und/oder formschlüssig in der Lochung oder dergleichen gehalten. Insbesondere sind die Widerlagerzungen elastisch ausgebildet und weichen radial nach innen aus, wenn das Spannelement mit den Widerlagerzungen durch die Öffnung oder dergleichen eingesteckt wird. Bei hinreichend tiefem Einstecken der Anschlussarmatur in die Öffnung gelangen die Haltevorsprünge hinter die Rückseite der die Öffnung bildenden Wandung und entspannen sich radial nach außen, wodurch die Anschlussarmatur formschlüssig an der Wandung gehalten wird.

Besonders vorteilhaft ist es, wenn der von den kreisförmig angeordneten Widerlagerzungen gebildete Umfang in Vergleich zu der Öffnung derart bemessen ist, dass sich die Widerlagerzungen im eingeführten Zustand nicht ganz entspannen können, sondern eine verbleibende Restanpresskraft auf die Innenseite der Öffnung ausüben. Somit ist die Anschlussarmatur, insbesondere das Spannelement in eingestecktem oder eingeführtem Zustand, also in Gebrauchsstellung, kraftschlüssig gegen ein Verdrehen gehalten. Von Vorteil ist dabei, dass das Spannelement nicht mit einer Hand oder mit einem Werkzeug gehalten werden muss, wenn die Schraubhülse oder die Überwurfmutter mit der Schraubhülse aufgeschraubt werden soll. Vielmehr setzt das Spannelement aufgrund der von den nicht ganz entspannten Widerlagerzungen bewirkten Reibekraft einem Mitdrehen des Spannelements mit der aufzuschraubenden Schraubhülse oder der aufzuschraubenden Überwurfmutter einen Widerstand entgegen, so dass die Schraubhülse über das Gewinde in bezug auf das Spannelement axial verschoben wird, wobei die Wandung zwischen Spannelement und Schraubhülse, insbesondere einem Anschlag an der Schraubhülse, eingeklemmt wird. Alternativ oder zusätzlich kann ein in Umfangsrichtung der Lochung oder dergleichen fixierender Formschluss vorgesehen sein, indem die Widerlagerzungen ganz oder teilweise oder andere Vorsprünge oder Rücksprünge an dem Spannelement in Passung mit entsprechenden Ausformungen im Rand der Lochung gelangen.

Bei einer vorteilhaften Ausgestaltung hat die Schraubhülse zum Verdrehen einen eine Angriffsfläche für ein Werkzeug aufweisenden Flansch, der in Gebrauchsstellung auf der den Haltevorsprüngen abgewandten Seite an der Wandung des Gehäuses vorzugsweise als Anschlag zur Anlage kommt. Vorzugsweise ist der Flansch der Schraubhülse mit einem Sechskant geformt und bietet Angriffsflächen für einen Maulschlüssel oder dergleichen. Alternativ ist der Flansch als Vierkant geformt oder weist Riffelungen auf, die dem manuellen Betätigen einen besseren Angriff bieten. Durch die Ausbildung einer Angriffsfläche für ein Werkzeug ist die Befestigung der Anschlussarmatur an der Wand nach Montage durch ein zusätzliches Anziehen der Schraubverbindung gegen unbeabsichtigtes Lösen sicherbar. Bei einer Ausgestaltung ist in die Aufsetzfläche des Flansches ein Dichtring eingearbeitet, der sich bei Anziehen der Schraubverbindung zwischen Spannelement und Schraubhülse verformt und somit die Schraubhülse relativ zur Wand fixiert.

Besonders günstig ist es, wenn der Sechskant der Schraubhülse dieselbe Schlüsselweite wie ein zum Betätigen der Überwurfmutter vorgesehener Sechskant hat, da in diesem Fall ein einheitliches Werkzeug zum Anziehen der Schraubverbindungen der Anschlussarmatur verwendbar ist.

Weitere vorteilhafte Ausgestaltungen ergeben sich durch Kombination der Merkmale der Ansprüche untereinander oder mit Merkmalen aus der Figurenbeschreibung.

Vor allem bei Kombination einzelner oder mehrerer der vorbeschriebenen Merkmale und Maßnahmen ergibt sich eine Anschlussarmatur, bei welcher die Schraubhülse verdreht werden kann, wenn der Befestigungsvorsprung in seine Gebrauchsstellung eingerastet oder eingeschnappt ist, wodurch der Ausgleich der oder die Anpassung an die Dicke der Gehäusewandung bewirkt und automatisch die Sperre axial in den Bereich der Widerlagerzungen verstellt wird.

Vor allem ist dabei günstig, wenn die Sperre einstückig mit der die Klemmlamellen oder Klemmfinger aufweisenden Schraubhülse verbunden ist, die die Sperre mit einem in Querschnitt ringförmigen Zwischenraum übergreift, wobei die Schraubhülse ein Außengewinde für die zum Betätigen der Klemmlamellen oder Klemmfinger dienenden Überwurfmutter und ein dem Zwischenraum zugewandtes, diesen nach der Außenseite begrenzendes Innengewinde zum Zusammenwirken und Verstellen der Sperre hat und das Außengewinde des Befestigungsvorsprunges in den Zwischenraum zwischen Sperre und Innengewinde der Schraubhülse einsetzbar ist und zu diesem Innengewinde passt.

Nachstehend ist ein Ausführungsbeispiel der Erfindung anhand der Zeichnung näher beschrieben. Es zeigt in zum Teil schematisierter Darstellung:
- Fig. 1: eine Anschlussarmatur in teilweiser Explosionsdar- stellung,
- Fig. 2: die Anschlussarmatur aus Fig. 1 in vormontiertem Zu- stand, und
- Fig. 3: eine Schnittdarstellung der Anschlussarmatur aus Fig. 1 in Gebrauchsstellung.

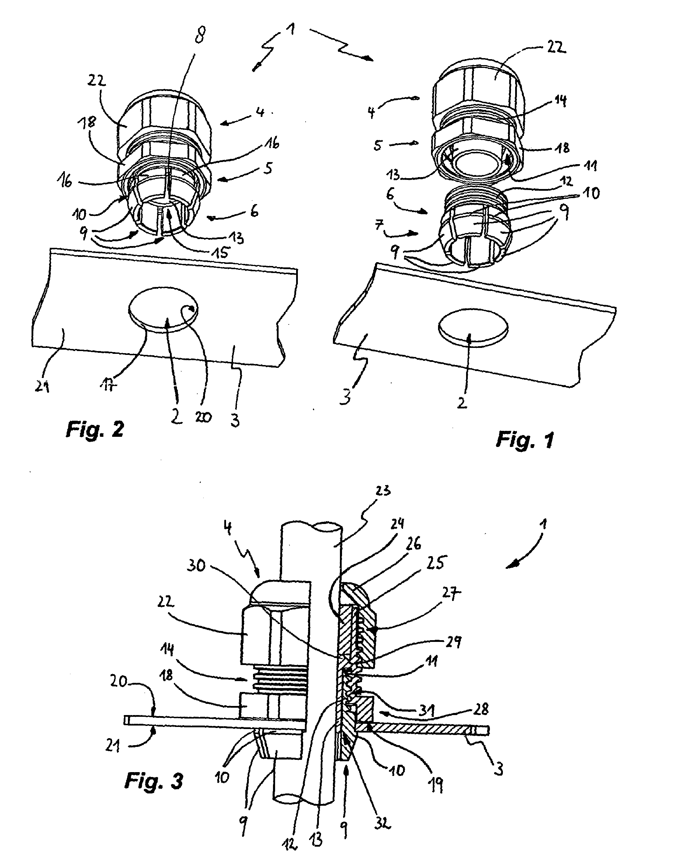

Fig. 1 zeigt eine im ganzen mit 1 bezeichnete Anschlussarmatur, die zur Montage in einer Öffnung 2 vorgesehen ist. Die Öffnung 2 ist in einer Gehäusewandung 3 vorgesehen. Statt einer Gehäusewandung 3 ist auch eine Wand mit einer Öffnung verwendbar.

Die Anschlussarmatur 1 ist wenigstens dreiteilig ausgeführt und umfasst eine Überwurfmutter 4, eine Schraubhülse 5 und ein Spannelement 6. Das in Fig. 1 der Gehäusewandung 3 zugewandte Ende des Spannelements 6 ist als hülsenförmiger Befestigungsvorsprung 7 ausgebildet, der durch einseitig offene Schlitze 8 in elastisch nachgiebige Widerlagerzungen 9 unterteilt ist. Die Widerlagerzungen 9 haben nach außen gerichtete Haltevorsprünge 10, die in Gebrauchsstellung durch die Öffnung 2 die Gehäusewandung 3 hintergreifen und somit die Anschlussarmatur 1 an der Gehäusewandung 3 halten. Das Spannelement 6 wird zum Gebrauch in einen ringförmigen Zwischenraum 11 der Schraubhülse 5 eingesteckt, wobei ein an dem den Widerlagerzungen 9 gegenüberliegenden Ende des Spannelements 6 ausgebildetes Außengewinde 12 in ein passendes Innengewinde der Schraubhülse 5 passt und eingeschraubt wird.

Die Schraubhülse 5 weist eine als Hülse ausgebildete Sperre 13 auf, deren Außendurchmesser kleiner ist als der Innendurchmesser des Spannelements 6. Somit gelangt die Sperre 13 beim Einstecken und Verschrauben des Spannelements 6 in den ringförmigen Zwischenraum 11 in den von dem Spannelement 6 umschlossenen Raum. Der Außendurchmesser der Sperre 13 ist auf den Innendurchmesser des Spannelements 6 so abgestimmt, dass die Sperre 13 an den Innenflächen der Widerlagerzungen 9 anliegt. Somit wird, wenn das Spannelement 6 hinreichend weit in den Zwischenraum 11 der Schraubhülse 5 eingeschraubt ist, die elastische Nachgiebigkeit der Widerlagerzungen 9 in radialer Richtung durch die Anwesenheit der Sperre 13 herabgesetzt und eine Verformung oder Rückverformung der Widerlagerzungen 9 in eine Lösestellung gesperrt.

Ist also die Sperre 13 in einem Bereich angeordnet, der neben dem von den Widerlagerzungen 9 gebildeten axialen Bereich liegt, so sind die Widerlagerzungen elastisch nachgiebig, wodurch ein Einsetzen und Herausnehmen des Spannelements 6 in die Öffnung beziehungsweise aus der Öffnung möglich ist. Die Sperre 13 ist somit in einer Löseposition angeordnet. Ist dagegen die Sperre 13 in demjenigen axialen Bereich angeordnet, der von den Widerlagerzungen 9 eingenommen wird, ist also gemäß Fig. 3 die Sperre 13 radial zumindest über einen Teil der axialen Erstreckung innerhalb der Widerlagerzungen 9 oder zwischen diesen angeordnet, so ist ein elastisches Nachgeben der Widerlagerzungen 9 nicht mehr möglich und das Spannelement 6 ist nicht mehr aus der Öffnung 2 entfernbar. Daher befindet sich die Sperre 13 in dieser Position in einer Halteposition der Anschlussarmatur 1. Die Sperre 13 wird somit aus der Löseposition in die Halteposition durch eine Verschiebebewegung überführt, die auf die Gehäusewandung 3 hin gerichtet ist.

Die Sperre 13 ist mit der Schraubhülse 5 verbunden, wodurch die Sperre 13 relativ zu dem Spannelement 6 axial verschoben wird, wenn das Außengewinde 12 des Spannelements 6 in ein Innengewinde im Zwischenraum 11 der Schraubhülse 5 eingeschraubt wird.

Die Schraubhülse 5 ist als Stutzen ausgebildet und weist an ihrer Außenseite ein Außengewinde 14 auf, das in ein passendes Innengewinde der Überwurfmutter 4 eingeschraubt ist. Außengewinde 14 der Schraubhülse 5 und Außengewinde 12 des Spannelements 6 sind gleichsinnig ausgebildet, wodurch beide Gewinde angezogen werden, wenn die Überwurfmutter 4 relativ zum Spannelement 6 verdreht wird.

Fig. 2 zeigt die Anschlussarmatur 1 in vormontiertem Zustand, also Auslieferungszustand. In vormontiertem Zustand ist die Schraubhülse 5 teilweise mit der Überwurfmutter 4 verschraubt und das Spannelement 6 teilweise mit der Schraubhülse 5 verschraubt. Hierbei ist insbesondere das Spannelement 6 nur soweit in die Schraubhülse 5 eingeschraubt, dass die Sperre 13 nicht in den von den Schlitzen 8 des Befestigungsvorsprunges 7 beschriebenen axialen Bereich gelangt, sondern maximal mit den die Widerlagerzungen 9 des Spannelements 6 verbindenden Bund 15 abschließt. Somit ist im Auslieferungszustand die elastische Nachgiebigkeit radial nach innen der Widerlagerzungen 9 durch die Sperre 13 nicht beeinträchtigt, und das Spannelement 6 ist praktisch ohne Widerstand in die Öffnung 2 einführbar, in der es in Gebrauchsstellung verrastet, und auch aus dieser entfernbar.

An den radial nach außen weisenden Seiten der Widerlagerzungen 9 sind axial benachbart zu den Haltevorsprüngen 10 jeweils Reibflächen 16 ausgebildet. Die Reibflächen erstrecken sich auf den Widerlagerzungen 9 von dem das Außengewinde 12 und die Widerlagerzungen 9 trennenden Bund 15 bis zum Ansatz der Haltevorsprüngen 10 und geben so die maximale Wandstärke der Gehäusewandung 3 vor, an welche die Anschlussarmatur 1 montierbar ist.

Diese Reibflächen 16 beschreiben gemeinsam einen gedachten Zylinder, dessen Durchmesser in entspanntem Zustand der Widerlagerzungen 9 etwas größer ist als der lichte Durchmesser der Öffnung 2. Hierdurch bringen die Widerlagerzungen 9 in eingesteckter Position über die Reibflächen 16, die dann mit dem Innenrand 17 der Öffnung 2 in Kontakt gebracht werden, eine Kraft auf den Innenrand 17 der Öffnung 2 ein. Somit wird das Spannelement 6 kraftschlüssig in der Öffnung 2 fixiert und gegen ein Verdrehen gegen die Gehäusewandung 3 gehalten. Somit ist die Schraubhülse 5 mit dem Spannelement 6 verschraubbar, wenn das Spannelement 6 in die Öffnung 2 eingesteckt ist und die Schraubhülse 5 gegen die Gehäusewandung 3 verdreht wird.

An der Schraubhülse 5 ist ein Sechskant 18 ausgebildet, der eine Angriffsfläche für ein Werkzeug, beispielsweise einen Maulschlüssel aufweist. Die Schraubhülse 5 wird mit dem Spannelement 6 soweit verschraubt, dass die an der Schraubhülse 5 ausgebildete Aufsetzfläche 19 auf der Vorderseite 20 der Gehäusewandung aufliegt und die Haltevorsprünge 9 auf der Rückseite 21 der Gehäusewandung 3 aufliegen und somit die Gehäusewandung 3 zwischen Spannelement 6 und Schraubhülse 5 eingespannt ist. Der an der Schraubhülse 5 ausgeformte Sechskant 18 bildet somit einen Flansch, der eine Aufsetzfläche 19 aufweist, die als Anschlag für die Schraubhülse 5 dient. Wie im folgenden zu Fig. 3 genauer erläutert wird, ist zwar die Schraubhülse 5 auch gegen die Überwurfmutter 4 verschraubbar, die Schraubhülse 5 setzt aber diesem Verschrauben vorerst einen gewissen Widerstand entgegen, so dass selbst bei Betätigen, also Verschrauben oder Drehen gegen die Gehäusewandung 3, der Überwurfmutter 4 zunächst die Schraubhülse 5 mitdreht und somit das Spannelement 6 in die Schraubhülse 5 geschraubt wird. Ist die Gehäusewandung 3 aber zwischen Aufsetzfläche 19 und Haltevorsprüngen 10 eingespannt, so wird durch ein Betätigen der Überwurfmutter 4 der beschriebene Widerstand überwunden und die Verschraubung zwischen Schraubhülse 5 und Überwurfmutter 4 angezogen, die Schraubhülse 5 also relativ gesehen in die Überwurfmutter 4 eingeschraubt.

Die Überwurfmutter 4 weist ebenfalls einen Sechskant 22 auf, der eine Angriffsfläche für ein Werkzeug bietet. Der Sechskant 22 der Überwurfmutter 4 ist mit identischen Abmessungen zu dem Sechskant 18 der Schraubhülse 5 ausgebildet. Somit ist zum einen dasselbe Werkzeug zum Betätigen der Überwurfmutter 4 als auch der Schraubhülse 5 verwendbar, zum anderen sind durch ein schräg zu einer radialen Richtung orientiertes Ansetzen des Betätigungswerkzeuges sogar Schraubhülse 5 und Überwurfmutter 4 gleichzeitig betätigbar. Zum Lösen der Verschraubung dreht man den Sechskant 18 der Schraubhülse 5, wodurch das in der Öffnung 2 klemmende Spannelement 6 aus der Schraubhülse 5 herausgedreht wird, wobei das Kabel 23 weiterhin geklemmt bleibt.

Fig. 3 zeigt die Anschlussarmatur 1 aus Fig. 1 in Gebrauchsstellung. Durch die Anschlussarmatur 1 ist ein Kabel 23 gesteckt und fixiert. Das Kabel 23 ist durch einen Dichtungsring 24 in der Schraubhülse 5 gehalten, wobei der Dichtungsring 24 in radialer Richtung durch Klemmlamellen 25 mit Druck beaufschlagt ist, der durch das Zusammenwirken der Klemmelamellen 25 mit einer konischen Verengung 26 der Überwurfmutter eingebracht wird.

An den axialen Endbereich der Schraubhülse 5, in dem der Dichtungsring 24 und die Klemmlamellen 25 angeordnet sind, schließt sich ein axialer Bereich der Schraubhülse 5 an, in dem auf der Außenseite der Schraubhülse 5 das Außengewinde 14 ausgebildet ist. Dieses Außengewinde 14 wird in ein passend ausgebildetes Innengewinde 27 der Überwurfmutter 4 eingeschraubt. Durch die Verschraubung wird eine axiale Verschiebung der Schraubhülse 5 gegen die Überwurfmutter 4 bewegt, wodurch die Klemmlamellen 25 gegen die konische Verengung 26 gedrückt und somit radial nach innen mit Druck beaufschlagt werden. An dem anderen, gegenüberliegenden Ende der Schraubhülse 5 schließt sich an den axialen Bereich mit dem Außengewinde 14 ein axialer Bereich an, in dem ein Flansch 28 ausgebildet ist, der einen Sechskant 18 formt und die Aufsetzfläche 19 bildet.

Im axialen Bereich des Außengewindes 14 der Schraubhülse 5 ist über einen ringförmigen Verbindungsbereich 29 die Sperre 13 mit der Schraubhülse 5 einstückig verbunden. An dem rückwärtig, also von der Gehäusewandung 3 weg weisenden axialen Ende der Schraubhülse 5 ist ein ringförmig um das Kabel 23 verlaufender, radial auswärtig hinterschnittener Vorsprung 30 ausgebildet, der den Dichtungsring 24 mit den Klemmlamellen 25 axial mitverschiebt. Der das Außengewinde 14 umfassende axiale Bereich der Schraubhülse 5 und der Flansch 28 übergreifen in axialer Richtung die Sperre 13, wodurch ein in etwa ringförmiger Zwischenraum 11 zwischen Sperre 13 und Schraubhülse 5 gebildet wird. An der Innenwand der Schraubhülse 5 ist im Bereich dieses Zwischenraums 11 ein Innengewinde 31 ausgebildet, das passend zu den Außengewinde 12 des Spannelements 6 geformt ist. Das Spannelement 6 wird somit in den Zwischenraum 11 eingeschraubt. Durch diese Schraubbewegung wird die mitbewegte Sperre 13 axial verschoben und gelangt in Kontakt mit den Innenseiten der Widerlagerzungen 9 und drückt mit dem vorderen Endbereich 32 gegen die Widerlagerzungen 9 radial nach außen.

Aus der Fig. 3 ist ersichtlich, dass der Dichtungsring 24, der bei Verschrauben der Schraubhülse 5 mit der Überwurfmutter 4 komprimiert wird, diesem Verschrauben einen Widerstand entgegensetzt. Bei einer Verschraubbewegung der Überwurfmutter 4 gegen die Gehäusewandung 3, die, wie erläutert, kraftschlüssig das Spannelement 6 fixiert, wird also zunächst die Schraubhülse 5 mitbewegt, bis die Aufsetzfläche 19 auf der Vorderseite 20 der Gehäusewandung aufliegt und die Widerlagerzungen 9, insbesondere die Haltevorsprünge 10, an der Rückseite 21 der Gehäusewandung anliegen und Spannelement 6 mit Schraubhülse 5 auf die Gehäusewandung 3 einen Anpressdruck einbringen. Sobald dieser Anpressdruck genügend groß ist, wird der durch den Dichtungsring 24 einer Verschraubung der Schraubhülse 5 gegen die Überwurfmutter 4 entgegengesetzter Widerstand überwunden, wodurch die Klemmlamellen 25 durch die konische Verengung 26 der Überwurfmutter 4 betätigt, also radial nach innen gedrückt, werden und der Dichtungsring 24 durch die Klemmlamellen 25 zusammengedrückt wird. Durch die Komprimierung des Dichtungsrings 24 wird somit ein Anpressdruck auf das Kabel 23 eingebracht und das Kabel 23 mithin kraftschlüssig in der Anschlussarmatur gehalten. Der Dichtungsring 24 bewirkt nicht nur die Fixierung des Kabel 23 in axialer Richtung, sondern dichtet auch den sich an die Rückseite 21 der Gehäusewandung 21 anschließenden Innenraum gegen den sich an die Vorderseite 20 der Gehäusewandung 3 anschließenden Außenraum ab, so dass keine Flüssigkeiten entlang des Kabels 23 in den Innenraum kriechen können. Diese Abdichtung wird insbesondere dadurch erreicht, dass der Dichtungsring 24 bei radialer Kompression axial etwas ausweicht und somit auf den Vorsprung 30 drückt.

In die Aufsetzfläche 19 ist ein zusätzlicher O-Ring (nicht gezeigt) eingelegt, der ebenfalls den Innenraum gegen den Außenraum abdichtet, so dass keine Flüssigkeiten oder Schmutz zwischen Innengewinde 31 der Schraubhülse 5 und Außengewinde 12 des Spannelements 6 und durch den Zwischenraum 11 aus dem Außenraum in den von der Gehäusewandung 3 umschlossenen Innenraum gelangen können.

Zu der Anschlussarmatur 1 für Kabel 23, Schläuche oder dergleichen gehört ein Spannelement 6, das in die Öffnung 2 einer Wand 3 gesteckt wird und mit dieser verrastet. Auf das Spannelement 6 wird eine Schraubhülse 5 geschraubt, die mit einer Sperre 13 verbunden ist, wobei die Sperre 13 in Gebrauchsstellung in das Spannelement 6 greift und die Verrastung arretiert. Auf die Schraubhülse 5 passt eine Überwurfmutter 4, mit der an der Schraubhülse 5 ausgebildete Klemmlamellen 25 betätigt werden, die das Kabel 23 oder den Schlauch oder dergleichen klemmend halten. Die Schraubgewinde sind gleichsinnig ausgeführt, so dass bei einem Verschrauben der Überwurfmutter gegen das Spannelement die Schraubhülse mitbewegt wird und ein Verschrauben der Schraubhülse 5 gegen das Spannelement bewirkt wird. Die Sperre 13 ist bevorzugt einstückig mit der Schraubhülse 5 in deren Innenraum mit einem im Querschnitt ringförmigen Abstand oder Zwischenraum 11 angeordnet, in welchen der Bereich mit dem Außengewinde 12 des Sperrelements 9 passt.

## Patentansprüche

1. Anschlussarmatur, auch winkel- oder T-förmige Anschlussarmatur, zum Befestigen von länglichen Körpern, beispielsweise von Schläuchen, Wellenschläuchen, Rohren, Kabeln (23) oder dergleichen, an einer Öffnung (2) oder einem Durchbruch oder einer Lochung, zum Beispiel in einer Wand (3) eines Gehäuses oder dergleichen, wobei die Anschlussarmatur (1) wenigstens einen Befestigungsvorsprung (7) aufweist, der durch offene Schlitze (8) in Widerlagerzungen (9) aufgeteilt ist, an deren freien Enden radial nach außen vorstehende Haltevorsprünge (10) angeordnet sind, wobei diese Widerlagerzungen (9) bei Einschieben des Befestigungsvorsprungs (7) in die Öffnung (2), den Durchbruch oder dergleichen Lochung durch deren Lochungsrand radial nach innen verformbar sind und hinter dem Rand (17) in die Halteposition gelangen, in welcher die Haltevorsprünge (10) diesen Rand (17) zumindest teilweise hintergreifen, und wobei mit Abstand zu den Haltevorsprüngen (10) wenigstens ein Anschlag (19) angeordnet ist, der in Gebrauchsstellung an dem dem hintergriffenen Rand der Öffnung (2) oder dergleichen gegenüberliegenden Lochungsrand anliegt und die Anschlussarmatur (1) in ihrem Inneren eine ihr zugehörige axial verschiebbare Sperre (13) aufweist, die in Löseposition außerhalb des Bereiches der Widerlagerzungen (9) oder Haltevorsprünge (10) und in Gebrauchsstellung radial zumindest über einen Teil der axialen Erstreckung innerhalb oder zwischen diese eingreifend angeordnet ist und die Widerlagerzungen (9) oder Haltevorsprünge (10) in dieser Gebrauchsstellung gegen eine radiale nach innen gerichtete Verformung sperrt, **dadurch gekennzeichnet, dass** die Widerlagerzungen (9) an einem Spannelement (6) ausgebildet sind, dass das Spannelement (6) ein Gewinde (12) aufweist, dass eine Schraubhülse (5) vorhanden ist, an deren einem axialen Ende Klemmlamellen (25) oder Klemmfinger zur Halterung der Schläuche (23) oder dergleichen ausgeformt sind, dass die Sperre (13) mit der Schraubhülse (5) verbunden und durch die Schraubhülse (5) axial verschiebbar ist, dass die Schraubhülse (5) für das axiale Verschieben der Sperre (13) ein zu dem Gewinde (12) des Spannelements (6) passendes erstes Gewinde (31) hat, dass die Schraubhülse (5) ein Außengewinde (14) für eine zum Betätigen der Klemmlamellen (25) oder Klemmfinger dienende Überwurfmutter (4) hat und dass das Außengewinde (14) der Schraubhülse gleichsinnig zu dem ersten Gewinde (12) des Spannelements (6) ausgebildet ist.

2. Anschlussarmatur nach Anspruch 1, **dadurch gekennzeichnet, dass** die Sperre (13) einstückig mit der Schraubhülse (5) verbunden ist.

3. Anschlussarmatur nach Anspruch 1 oder 2, **dadurch gekennzeichnet, dass** das Gewinde (12) des Spannelements (6) ein Außengewinde ist und dass das erste Gewinde der Schraubhülse (5) ein Innengewinde (31) ist.

4. Anschlussarmatur nach einem der Ansprüche 1 bis 3, **dadurch gekennzeichnet, dass** das erste Gewinde (31) der Schraubhülse (5) in einem ersten axialen Bereich der Schraubhülse (5) angeordnet ist, dass das Außengewinde (12) der Schraubhülse (5) in einem zweiten axialen Bereich der Schraubhülse (5) angeordnet ist und dass der erste axiale Bereich mit dem zweiten axialen Bereich der Schraubhülse (5) überlappt.

5. Anschlussarmatur nach einem der Ansprüche 1 bis 4, **dadurch gekennzeichnet, dass** die Schraubhülse (5) die Sperre (13) mit einem im Querschnitt ringförmigen Zwischenraum (11) axial übergreift.

6. Anschlussarmatur nach einem der Ansprüche 1 bis 5, **dadurch gekennzeichnet, dass** das erste Gewinde (31) der Schraubhülse (5) in dem im Querschnitt ringförmigen Zwischenraum (11) angeordnet ist.

7. Anschlussarmatur nach einem der Ansprüche 1 bis 6, **dadurch gekennzeichnet, dass** an dem von den Klemmlamellen (25) oder Klemmfingern abgewandten axialen Ende der Schraubhülse (5) der Anschlag (19, 28) ausgebildet ist.

8. Anschlussarmatur nach einem der Ansprüche 1 bis 7, **dadurch gekennzeichnet, dass** das Spannelement (6) nach Einstecken in Gebrauchsstellung kraftschlüssig und/oder formschlüssig in der Lochung (2) oder dergleichen gehalten ist.

9. Anschlussarmatur nach einem der Ansprüche 1 bis 8, **dadurch gekennzeichnet, dass** der Kraftschluss durch eine Vorspannung der Widerlagerzungen (9) bewirkt wird, die in Gebrauchsstellung gegenüber ihrer entspannten Lage radial nach innen gedrückt sind.

10. Anschlussarmatur nach einem der Ansprüche 1 bis 9, **dadurch gekennzeichnet, dass** die Schraubhülse (5) zum Verdrehen einen eine Angriffsfläche (18, 28) für ein Werkzeug aufweisenden Flansch hat, der in Gebrauchsstellung auf der den Haltevorsprüngen (10) abgewandten Seite an der Wandung (3) des Gehäuses vorzugsweise als Anschlag (28) zur Anlage kommt.

11. Anschlussarmatur nach einem der Ansprüche 1 bis 10, **dadurch gekennzeichnet, dass** der Flansch (28) der Schraubhülse (5) mit einem Sechskant (18) geformt ist.

12. Anschlussarmatur nach einem der Ansprüche 1 bis 11, **dadurch gekennzeichnet, dass** der Sechskant (18) der Schraubhülse (5) dieselbe Schlüsselweite wie ein zum Betätigen der Überwurfmutter (4) vorgesehener Sechskant (22) hat.

## Claims

1. Connecting fitting, also an angled or T-shaped connecting fitting, for attaching elongate bodies, for example hoses, corrugated hoses, pipes, cables (23) or the like, to an opening (2) or gap or hole, for example in a wall (3) of a housing or the like, wherein the connecting fitting (1) has at least one fixing projection (7) which is divided up by open slots (8) into support tongues (9) on the free ends of which are provided radially outwardly extending retaining projections (10), these support tongues (9) being radially inwardly deformable by the edge of the opening (2), gap or similar hole when the fixing projection (7) is pushed into the opening, and moving behind the edge (17) into the retaining position in which the retaining projections (10) at least partly engage behind this edge (17), and wherein there is provided, at a spacing from the retaining projections (10), at least one stop (19) which abuts in the position of use on the edge of the hole located opposite the engaged edge of the opening (2) or the like, and the connecting fitting (1) has in its interior its own axially movable stopping means (13) which, in the release position, is arranged outside the range of the support tongues (9) or retaining projections (10) and in the position of use is arranged so as to engage radially inside or between them, at least over part of its axial extent, and locks the support tongues (9) or retaining projections (10) in this position of use against a radial, inwardly directed deformation, **characterised in that** the support tongues (9) are formed on a tensioning element (6), **in that** the tensioning element (6) has a thread (12), **in that** a screw-threaded sleeve (5) is provided, on one axial end of which are formed clamping segments (25) or clamping fingers for securing the hoses (23) or the like, **in that** the stopping means (13) is connected to the screw-threaded sleeve (5) and is axially movable by means of the screw-threaded sleeve (5), **in that** the screw-threaded sleeve (5) has a first thread (31) that fits the thread (12) of the tensioning element (6) for axially moving the stopping means (13), **in that** the screw-threaded sleeve (5) has an external thread (14) for a check nut (4) that serves to actuate the clamping segments (25) or clamping fingers, and **in that** the external thread (14) of the screw-threaded sleeve (5) is configured to turn in the same direction as the first thread (12) of the tensioning element (6).

2. Connecting fitting according to claim 1, **characterised in that** the stopping means (13) is formed in one piece with the screw-threaded sleeve (5).

3. Connecting fitting according to claim 1 or 2, **characterised in that** the thread (12) of the tensioning element (6) is an external thread and **in that** the first thread of the screw-threaded sleeve (5) is an internal thread (31).

4. Connecting fitting according to one of claims 1 to 3, **characterised in that** the first thread (31) of the screw-threaded sleeve (5) is arranged in a first axial region of the screw-threaded sleeve (5), **in that** the external thread (12) of the screw-threaded sleeve (5) is arranged in a second axial region of the screw-threaded sleeve (5) and **in that** the first axial region overlaps with the second axial region of the screw-threaded sleeve (5).

5. Connecting fitting according to one of claims 1 to 4, **characterised in that** the screw-threaded sleeve (5) engages axially over the stopping means (13) with an intermediate space (11) of annular cross-section.

6. Connecting fitting according to one of claims 1 to 5, **characterised in that** the first thread (31) of the screw-threaded sleeve (5) is arranged in the intermediate space (11) of annular cross-section.

7. Connecting fitting according to one of claims 1 to 6, **characterised in that** the stop (19, 28) is formed on the axial end of the screw-threaded sleeve (5) that is remote from the clamping segments (25) or clamping fingers.

8. Connecting fitting according to one of claims 1 to 7, **characterised in that** after being inserted into the position of use the tensioning element (6) is held in the hole (2) or the like by frictional and/or interlocking engagement.

9. Connecting fitting according to one of claims 1 to 8, **characterised in that** the frictional engagement is achieved by pre-tensioning of the support tongues (9) which are pressed radially inwards in the position of use, by comparison with their untensioned state.

10. Connecting fitting according to one of claims 1 to 9, **characterised in that**, for rotation, the screw-threaded sleeve (5) has a flange comprising an engagement surface (18, 28) for a tool, which in the position of use, comes to abut on the wall (3) of the housing on the side remote from the retaining projections (10), preferably as a stop (28).

11. Connecting fitting according to one of claims 1 to 10, **characterised in that** the flange (28) of the screw-threaded sleeve (5) is shaped to comprise a hexagon (18).

12. Connecting fitting according to one of claims 1 to 11, **characterised in that** the hexagon (18) of the screw-threaded sleeve (5) has the same spanner size as a hexagon (22) provided for the purpose of actuating the check nut (4).

## Revendications

1. Raccord, également raccord coudé ou raccord en T destiné à la fixation de corps allongés, par exemple des tuyaux souples, des flexibles annelés, des tubulures, des câbles (23) ou éléments similaires, à un orifice (2) ou à un évidement, voire à une perforation pratiqué(e), par exemple, dans une paroi (3) d'un boîtier ou objet analogue, sachant que ledit raccord (1) présente au moins une saillie de fixation (7) scindée, par des fentes béantes (8), en des languettes de contre-butée (9) aux extrémités libres desquelles se trouvent des protubérances d'arrêt (10) en débord vers l'extérieur dans le sens radial ; sachant que, lors d'une insertion de ladite saillie de fixation (7) dans ledit orifice (2), ledit évidement ou ladite perforation similaire, ces languettes de contre-butée (9) peuvent être déformées radialement vers l'intérieur par le bord de découpe de celui (celle)-ci et parviennent, au-dessous dudit bord (17), à la position d'arrêt dans laquelle les protubérances d'arrêt (10) emprisonnent ce bord (17) par-derrière, au moins en partie ; sachant qu'au moins une butée (19) située à distance desdites protubérances d'arrêt (10) est en applique, en position d'utilisation, contre le bord de découpe tourné à l'opposé dudit bord de l'orifice (2) ou de l'ouverture similaire, qui est emprisonné par-derrière ; et sachant que ledit raccord (1) renferme, dans son espace intérieur, une pièce associée de blocage (13) apte à coulisser axialement qui, en position libérée, est disposée en dehors de la région desdites languettes de contre-butée (9) ou desdites protubérances d'arrêt (10) et, en position d'utilisation, est logée dans ces dernières ou s'engage entre ces dernières dans le sens radial, au moins sur une partie de l'étendue axiale, et bloque lesdites languettes de contre-butée (9) ou protubérances d'arrêt (10), dans cette position d'utilisation, contre une zone radiale déformée dirigée vers l'intérieur, **caractérisé par le fait que** les languettes de contre-butée (9) sont ménagées sur un élément de serrage (6) ; que ledit élément de serrage (6) comporte un filetage (12) ; qu'il est prévu une douille de vissage (5) à l'une des extrémités axiales de laquelle des lamelles de coincement (25), ou doigts de coincement, sont façonné(e)s en vue de retenir les tuyaux souples (23) ou éléments similaires ; que la pièce de blocage (13) est reliée à la douille de vissage (5), et peut être animée de coulissements axiaux par ladite douille de vissage (5) ; que ladite douille de vissage (5) comporte, en vue du coulissement axial de ladite pièce de blocage (13), un premier filetage (31) adapté au filetage (12) de l'élément de serrage (6) ; que ladite douille de vissage (5) offre un filetage extérieur (14) assigné à un capuchon taraudé (4) servant à l'actionnement des lamelles de coincement (25), ou doigts de coincement ; et que ledit filetage extérieur (14) de la douille de vissage est orienté dans le même sens que le premier filetage (12) dudit élément de serrage (6).

2. Raccord selon la revendication 1, **caractérisé par le fait que** la pièce de blocage (13) est reliée d'un seul tenant à la douille de vissage (5).

3. Raccord selon la revendication 1 ou 2, **caractérisé par le fait que** le filetage (12) de l'élément de serrage (6) est un filetage extérieur ; et que le premier filetage de la douille de vissage (5) est un filetage intérieur (31).

4. Raccord selon l'une des revendications 1 à 3, **caractérisé par le fait que** le premier filetage (31) de la douille de vissage (5) est disposé dans une première région axiale de ladite douille de vissage (5) ; que le filetage extérieur (14) de ladite douille de vissage (5) est disposé dans une seconde région axiale de ladite douille de vissage (5) ; et que ladite première région axiale est en chevauchement avec ladite seconde région axiale de ladite douille de vissage (5).

5. Raccord selon l'une des revendications 1 à 4, **caractérisé par le fait que** la douille de vissage (5) coiffe la pièce de blocage (13), dans le sens axial, par un espace interstitiel (11) annulaire en coupe transversale.

6. Raccord selon l'une des revendications 1 à 5, **caractérisé par le fait que** le premier filetage (31) de la douille de vissage (5) est situé dans l'espace interstitiel (11) annulaire en coupe transversale.

7. Raccord selon l'une des revendications 1 à 6, **caractérisé par le fait que** la butée (19, 28) est ménagée à l'extrémité axiale de la douille de vissage (5) qui est tournée à l'opposé des lamelles de coincement (25), ou doigts de coincement.

8. Raccord selon l'une des revendications 1 à 7, **caractérisé par le fait que** l'élément de serrage (6) est retenu par interaction mécanique et/ou par complémentarité de formes, dans la perforation (2) ou ouverture similaire, à l'issue de l'emboîtement en position d'utilisation.

9. Raccord selon l'une des revendications 1 à 8, **caractérisé par le fait que** l'interaction mécanique est provoquée par une précontrainte des languettes de contre-butée (9) qui sont pressées radialement vers l'intérieur, en position d'utilisation, par rapport à leur position soulagée.

10. Raccord selon l'une des revendications 1 à 9, **caractérisé par le fait que** la douille de vissage (5) présente, en vue de la mise en rotation, une collerette qui est munie d'une surface (18, 28) d'engagement d'un outil et est appliquée contre la paroi (3) du boîtier en position d'utilisation, de préférence en tant que butée (28), du côté tourné à l'opposé des protubérances d'arrêt (10).

11. Raccord selon l'une des revendications 1 à 10, **caractérisé par le fait que** la collerette (28) de la douille de vissage (5) est pourvue d'une configuration (18) à six pans.

12. Raccord selon l'une des revendications 1 à 11, **caractérisé par le fait que** la configuration (18) à six pans, sur la douille de vissage (5), présente la même ouverture de clé qu'une configuration (22) à six pans prévue pour l'actionnement du capuchon taraudé (4).
